# EUROPEAN PATENT APPLICATION

(11) **EP 4 083 753 A1**
(43) Date of publication of application: **02.11.2022**
(21) Application number: 22167307.2
(22) Date of filing: 08.04.2022
(51) Int. Cl.: G06F 3/01, G02B 27/01, G06T 19/00, G09G 3/00

(54) **DISPLAY APPARATUS AND METHOD EMPLOYING REPROJECTION BASED ON MARKER POSE**

(30) Priority: 30.04.2021 US 202117245823
(71) Applicant: Varjo Technologies Oy, 00100 Helsinki (FI)
(72) Inventor: Strandborg, Mikko, Hangonkylä (FI); Melakari, Klaus, Espoo (FI); Miettinen, Ville, Helsinki (FI)
(74) Representative: Aaltonen, Janne Lari Antero

(57) **Abstract**

An AR system is arranged to display an image stream of an environment with one or more virtual objects, each virtual object being associated with a marker in the image stream. The AR system includes a tracking subsystem (203) arranged to track a first pose of the marker in the image, and inform a frame rendering subsystem (209), which generates a rendering of the VR object and provides the rendering to the reprojecting subsystem (11) together with information about the first pose of the marker and information identifying a set of pixels included in the VR image. The tracking subsystem further determines a second pose of the marker based on detected movement and informs the reprojecting subsystem about the second pose. The reprojecting subsystem renders an image frame including the image stream of the environment with the rendering of the VR object reprojected in dependence of the second pose.

## Description

### TECHNICAL FIELD

The present disclosure relates to a method of using reprojection to generate a composite image stream comprising an image stream of an environment with an artificial object superimposed in the images, and to a system for generating such an image stream and a computer program arranged to control such a method.

### BACKGROUND

A typical use case in Augmented Reality (AR) or Virtual Reality (VR) is a situation where a virtual object is superimposed on top of the real-world image where the object follows the position and orientation of a real-world object (for example, an AR marker). It is important to ensure that the virtual object is displayed in the correct position in the image. Markers are typically defined in the image, to indicate where the object is to be placed, and each object should follow the movement of the associated marker. The process of detecting the markers from a video frame and rendering the object always takes a nontrivial amount of time, so any AR system necessarily introduces some latency on the output image, especially in cases where the marker is moving.

Various methods for reducing latency in general in an AR/VR system are known, but none that specifically reduces the latency caused by determining the position of the markers and/or the superimposed objects in the image.

### SUMMARY

An object of the present disclosure is to reduce the latency required for determining a position of a marker and displaying a virtual object in the correct position in an image stream.

This object is achieved according to the present disclosure by an image rendering system arranged to display an AR image in an image stream of an environment with one or more VR objects added to the image stream, each VR object being associated with a marker in the image stream. The image rendering system includes a tracking subsystem, a frame rendering subsystem and a reprojecting subsystem, the tracking subsystem being arranged to track a first pose of the marker in the image, said first pose including the marker's position, and inform the frame rendering subsystem of the first pose. The frame rendering subsystem is arranged to generate at least one rendering of the VR object and arranged to provide the rendering to the reprojecting subsystem, together with information about the first pose of the marker and information identifying a set of pixels included in the VR image, and the tracking subsystem is further arranged to detect a movement of the marker and determine a second pose including a second position of the marker, based on the detected movement, and inform the reprojecting subsystem about the second pose. The reprojecting subsystem is in turn arranged to render an image frame including the image stream of the environment with the rendering of the VR object reprojected in dependence of the second pose.

The present disclosure also relates to a method of composing an AR image including adding one or more VR objects to an image stream of an environment, the environment including one or more markers, each associated with a position in which a VR object is to be added to the image, the method including the steps of
- detecting a first pose of the first marker, including information about the marker's position, and informing a frame rendering function about the detected pose
- generating, in dependence of the first pose, and information identifying a set of pixels included in the VR image, at least a first rendering of a first VR object associated with a first of the one or more markers, as seen from a first angle, said rendering including a number of pixels and color values for these pixels,
- detecting a second pose of the first marker, including a second position, and
- reprojecting the rendering of the first VR object in the AR image in accordance with the detected movement of the first marker.

The disclosure also relates to a computer program product, preferably stored on a non-transitory storage medium holding code means which when run in a computer will cause the computer to perform the method according to embodiments of the present disclosure.

Embodiments of the present disclosure significantly reduce the latency involved in determining the position in which an object is to be superimposed in a composite image, by simplifying the process of determining the position of a marker for the object.

Additional aspects, advantages, features and objects of the present disclosure will be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF DRAWINGS

Embodiments of the present disclosure will now be described, by way of example only, with reference to the following diagrams wherein:
Fig. 1 is a schematic illustration of an AR/VR imaging system;
Fig. 2 is a schematic illustration of a portion of the imaging system in more detail and
Fig. 3 is a flow chart of a method according to the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

According to the disclosure, the pixels in the VR image that are associated with a specific marker, that is, the pixels in which the additional object is to be rendered, are preferably identified. A client application in the imaging system renders the additional object and determines its position based on first position data for the marker obtained from the server. The server application then determines a new position for the marker, either directly from a later image frame, or by projection based on a detected movement. When the client application forwards the rendering to the server, the server creates the composite image, including reprojecting the additional object in accordance with the new position of the marker. This is typically done by moving the additional object in dependence of the difference between the new position and the first position.

In some embodiments of the present disclosure, the first and the second pose include information about a first and second orientation of the marker, respectively. This enables the rendering of the virtual object as seen from different orientations, thus adapting the rendering to the orientation of the marker. The tracking subsystem may be arranged to determine the second pose as an estimated future pose based on the detected movement. In this way the continued movement of the marker may be predicted and taken into account.

In preferred embodiments, the reprojecting subsystem is arranged to render the image frame with the rendering of the VR object reprojected in dependence of the difference between the second pose and the first pose. In the method, the second pose may then be determined as an estimate of the position of the marker, said estimate based on a detected movement of the marker.

The rendering subsystem may be arranged to render at least a first and a second rendering of the VR object and forward the renderings to the reprojecting subsystem and the reprojecting subsystem is arranged to reproject the VR image in dependence of the second pose. This allows a greater flexibility in how the resulting composite image is determined.

The markers may correspond to any suitable object in the imaged environment, that is being tracked. Examples of suitable objects for tracking include but are not limited to
- AR markers
- tracking data from a hand tracking system
- eye gaze information
- XR controllers
- a tracked feature in the video feed

The inventive method may further include the step of generating a second rendering of the first VR object as seen from a second angle that is different from the first angle and generating a reprojected image in the AR image using the information in the first and second rendering.

The rendering of the virtual object may be associated with one or more of the following types of information to aid the reprojection:
- color image surface of the object
- depth map that corresponds to the color image,
- the pose or poses that were used to render the objects,
- classification metadata to identify which pixels in the image correspond to each tracked object, or if the pixels are not attached to any tracked object

### DETAILED DESCRIPTION OF DRAWINGS

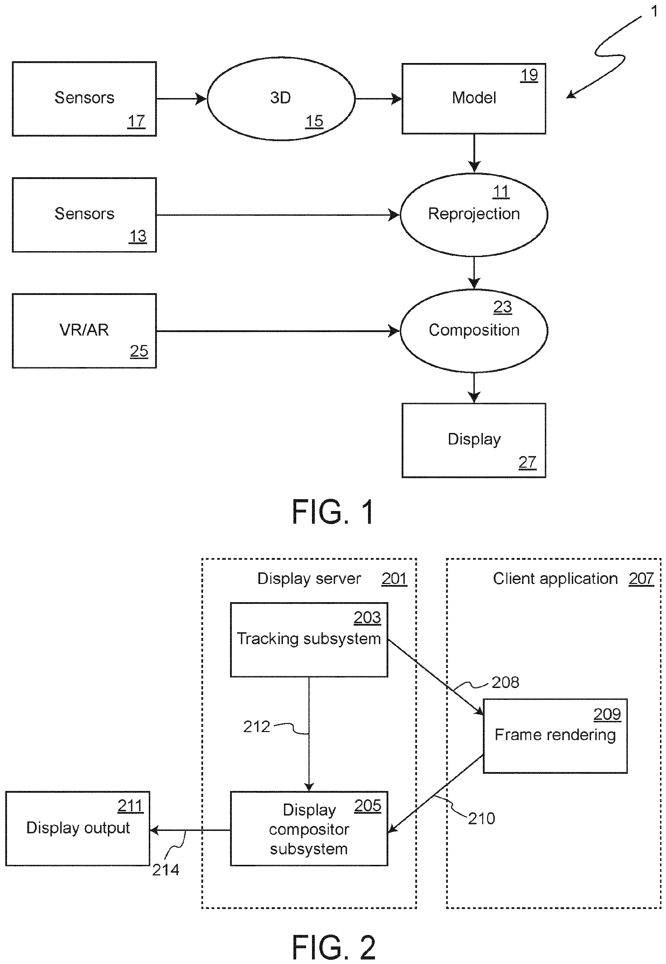

Fig. 1 shows schematically a VST imaging system 1, including the components typically present in such a system.

A reprojection subsystem 11 is arranged to receive an image stream from one or more sensors 13. The sensors typically include cameras, such as VST cameras, and at least one sensor arranged to provide depth data, such as a LIDAR or ToF sensor. The data received from the sensors are used to reproject an image stream including color and depth information from a source position corresponding to the position of the camera, to a target position which is normally the position of the user's eye. Reprojection is used to account for movements of the user's head and also for the difference in positions of the source position and the target position, that is, the camera's position and the location of the user's eye. How to do this is well known in the art.

As is common in the art, the system also comprises a 3D reconstruction subsystem 15 arranged to receive input from various types of sensors 17 and create a 3D reconstruction 19 in the form of an accumulated point cloud or a set of mesh and color information. The 3D reconstruction is kept in a memory unit in, or accessible from, the system and is provided to the reprojection subsystem. As is known in the art, the sensors 17 providing input to the 3D reconstruction subsystem may include ToF, Lidar, VST cameras, IR cameras and any other suitable source of image and depth information.

A composition subsystem 23 is arranged in a conventional way to receive the reprojected image stream from the reprojection subsystem and VR/AR content generated in any suitable way by a VR/AR content generating unit 25 and to generate the composite image stream by combining the reprojected image stream and the VR/AR content.

The system comprises a display unit 27, which may be a head-mounted display, on which the composite image stream may be displayed.

The final image stream is projected on a VR/AR display, typically a head-mounted display in a manner known in the art.

Fig. 2 shows the parts of an embodiment of an imaging system that are most relevant for the present disclosure and the interactions between these parts. As before, the imaging system is arranged to render a composite image stream where a generated object is superimposed on an image of an environment, for example a real-world view obtained through video see-through or optical see-through. A marker in the image of the environment is used to indicate the position of the generated object in the image. A display server 201 includes a tracking subsystem 203 and a display compositor subsystem 205. A client application 207, arranged in communication with the display server, includes a frame rendering function 209. The tracking subsystem tracks the position of the marker and informs the client application about the position as indicated by an arrow 208. The frame rendering function 209 renders a generated image of the virtual object and sends it to the display compositor subsystem 205, as indicated by arrow 210, along with the position information indicating the position for which the generated image was rendered.

In the meantime, the tracker's position may have changed. The tracking subsystem is therefore arranged to send updated position information about the tracker's position to the compositor subsystem, as indicated by arrow 212. The compositor subsystem 205 then reprojects the generated image in the image stream based on the difference between the updated position information and the first position information, thus adjusting the position of the generated image in view of the direction and magnitude of the movement of the tracker in the image.

The tracking subsystem 203 provides the client application 207 with the most up-to-date estimate of the position and orientation of the tracked marker (or comparable pose information, in case of gaze tracking). The pose estimate may be the latest "raw" data or predicted to a specific time point in the future, typically to the estimated display time of the frame being rendered.

The client application 207 uses the pose information to render the object that is meant to follow the movement of the tracked object, and sends it to the display server 201, along with following information:
- Color image surface of the object
- Depth map that corresponds to the color image
- The poses that were used to render the objects
- Classification metadata to identify which pixels in the image correspond to each tracked object, or if the pixels are not attached to any tracked object (see more below)

From the display compositor subsystem 205, the composite image is sent to a display output unit 211 to be displayed to the user.

The application can provide the classification metadata in any of the following ways:
- A separate object ID map (image) where each pixel is assigned to a specific tracked object
- Bounding volume information per each tracked object, either in 2D (screen coordinate rectangles) or in 3D (world space bounding volumes)
- By rendering each tracked object into separate images

Once the application has rendered the frame(s) and sent them over to the compositor 205, the compositor retrieves more up-to-date pose information for each tracked object from the tracking subsystem 203. Using the information provided by the application and the updated poses, the compositor 205 can reproject each pixel so that it matches the new tracked object position. This is done in addition to the warp caused by the HMD movement using the Fixed Point Iteration method or any other image reprojection method.

For completeness, this is the transformation for which the compositor must find the inverse for. For each AR-guided pixel in the submitted VR image:
- Calculate the world space position of the pixel by using the pixel coordinates, pixel depth value and the submitted projection and view matrices.
- Calculate the pixel's relative position to the AR marker by multiplying the pixel's world position with the inverse of the AR marker's pose matrix (as submitted by the application).
- Reproject the pixel to updated screen coordinates by multiplying the result from previous calculation by up-to-date AR Marker pose matrix, up-to-date view matrix and the projection matrix.

There are cases where the rotation of an AR marker would expose surfaces in the VR object that were either occluded or were facing away from the camera when the VR object was rendered. In such cases a search into the reprojected image will produce no matches in that area. This can be mitigated by rendering the VR object from several directions and performing the iterative search on all of them and using the closest match or using any other disocclusion mitigation method.

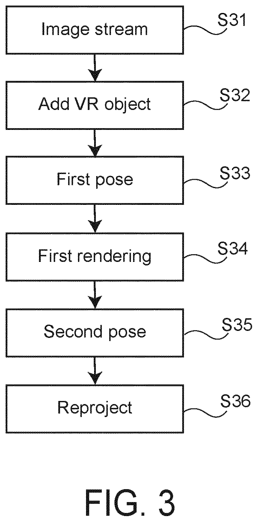

Fig. 3 is a flow chart of a method of composing an AR image according to embodiments of the present disclosure. In a first step S31 an image stream of an environment is provided from one or more cameras. the environment including one or more markers, each associated with a position in which a VR object is to be added to the image. In a second step S32, one or more VR objects are added to the image in the position or positions indicated by the markers.

In a third step S33, a first pose of the each marker is detected, the pose including information about the marker's position and optionally the marker's orientation. A frame rendering function is informed about the detected pose. Next, in step S34, at least a first rendering of the one or more VR objects associated with the one or more markers, is generated independence of the first pose together with information identifying a set of pixels included in the VR image. The VR object is rendered as seen from a first angle, and said rendering including a number of pixels and color values for these pixels, In step S35, a second pose of the first marker, including a second position and optionally a second orientation, is detected. In step S36, the rendering of each VR object in the composite image is reprojected in the AR image in accordance with the detected movement of the corresponding marker.

## Claims

1. An image rendering system arranged to display an AR image an image stream of an environment with one or more VR objects added to the image stream each VR object being associated with a marker in the image stream, the image rendering system including a tracking subsystem (203), a frame rendering subsystem (209) and a reprojecting subsystem (11), the tracking subsystem being arranged to track a first pose of the marker in the image, said first pose including the marker's position, and inform the frame rendering subsystem of the first pose,
the frame rendering subsystem being arranged to generate at least one rendering of the VR object and arranged to provide the rendering to the reprojecting subsystem, together with information about the first pose of the marker and information identifying a set of pixels included in the VR image,
the tracking subsystem being further arranged to detect a movement of the marker and determine a second pose including a second position of the marker, based on the detected movement, and inform the reprojecting subsystem about the second pose, the reprojecting subsystem being arranged to render an image frame including the image stream of the environment with the rendering of the VR object reprojected in dependence of the second pose.

2. An image rendering system according to claim 1, in which the tracking subsystem (203) is arranged to determine the second pose as an estimated future pose based on the detected movement.

3. An image rendering system according to claim 1 or 2, wherein the reprojecting subsystem (11) is arranged to render the image frame with the rendering of the VR object reprojected in dependence of the difference between the second pose and the first pose.

4. An image rendering system according to any of the preceding claims, wherein the rendering subsystem (11) is arranged to render at least a first and a second rendering of the VR object and forward the renderings to the reprojecting subsystem and the reprojecting subsystem is arranged to reproject the VR image in dependence of the second pose.

5. A method of composing an AR image including adding one or more VR objects to an image stream of an environment, the environment including one or more markers, each associated with a position in which a VR object is to be added to the image, the method including the steps of
detecting a first pose of the first marker, including information about the marker's position, and informing a frame rendering function about the detected pose,
generating, in dependence of the first pose, and information identifying a set of pixels included in the VR image, at least a first rendering of a first VR object associated with a first of the one or more markers, as seen from a first angle, said rendering including a number of pixels and color values for these pixels,
detecting a second pose of the first marker, including a second position reprojecting the rendering of the first VR object in the AR image in accordance with the detected movement of the first marker.

6. A method according to claim 5, wherein the marker corresponds to a tracked object in the imaged environment, for example, one of the following:
AR markers
tracking data from hand tracking system
eye gaze information
XR controllers
a tracked feature in the video feed

7. A method according to claim 5 or 6 including the step of generating a second rendering of the first VR object as seen from a second angle that is different from the first angle and generating a reprojected image in the AR image using the information in the first and second rendering.

8. A method according to any of claims 5-7, wherein the second pose is determined as an estimate of the position of the marker, said estimate based on a detected movement of the marker.

9. A method according to any of claims 5-8, wherein the rendering of the first VR object is associated with the following information to aid the reprojection:
color image surface of the object,
depth map that corresponds to the color image,
the pose or poses that were used to render the objects,
classification metadata to identify which pixels in the image correspond to each tracked object, or if the pixels are not attached to any tracked object.

10. A computer program product for controlling the rendering of a composite image in an image display system, said computer program product comprising non-transitory storage medium having thereon computer readable code means which when run in a processor of the image display system will cause the image display system to perform the following steps: tracking a first pose of the marker in the image, said first pose including the marker's position,
generating at least one rendering of the VR object detecting a movement of the marker and determining a second pose including a second position of the marker, based on the detected movement, and rendering an image frame including the image stream of the environment with the rendering of the VR object reprojected in dependence of the second pose and information about the first pose and information identifying a set of pixels included in the VR image.

11. A computer program product according to claim 10, arranged to cause the rendering of the image frame with the rendering of the VR object reprojected in dependence of the difference between the second pose and the first pose.

12. A computer program product according to claim 10 or 11, arranged to cause at least a first and a second rendering of the VR object and the forwarding the renderings to the reprojecting subsystem (11) and the reprojecting of the VR image in dependence of the second pose.

13. A computer program product according to any of claims 10-12, wherein the code means are arranged to cause the image display system to add one or more VR objects to an image stream of an environment, the environment including one or more markers, each associated with a position in which a VR object is to be added to the image, the method including the steps of
detecting a first pose of the first marker, including information about the marker's position,
generating, in dependence of the first pose, and information identifying a set of pixels included in the VR image, at least a first rendering of a first VR object associated with a first of the one or more markers, as seen from a first angle, said rendering including a number of pixels and color values for these pixels,
detecting a second pose of the first marker, including a second position
reprojecting the rendering of the first VR object in the AR image in accordance with the detected movement of the first marker.

14. A computer program product according to claim 13, wherein the code means will cause the image display system to generate a second rendering of the first VR object as seen from a second angle that is different from the first angle and to generate a reprojected image in the AR image using the information in the first and second rendering.

15. A computer program product according to claim 13 or 14, wherein the code means are arranged to determine the second pose as an estimate of the position of the marker, said estimate based on a detected movement of the marker.
